# EUROPÄISCHE PATENTSCHRIFT

(11) **EP 1 477 380 B1**
(45) Veröffentlichungstag und Bekanntmachung des Hinweises auf die Patenterteilung: **11.07.2007**
(21) Anmeldenummer: 04011409.2
(22) Anmeldetag: 13.05.2004
(51) Int. Cl.: B61C 9/44, H02K 7/00

(54) **Elektrischer Hohlwellen-Antriebsmotor**
Electric driving motor with tubular shaft
Moteur d'entraînement électique à arbre creux

(30) Priorität: 16.05.2003 DE 10322022
(43) Veröffentlichungstag der Anmeldung: 17.11.2004
(73) Patentinhaber: MAGNET-MOTOR GESELLSCHAFT FÜR MAGNETMOTORISCHE TECHNIK MBH, 82319 Starnberg (DE)
(72) Erfinder: Altrichter, Ewald, 87640 Biessenhofen (DE); Ehrhart, Peter Dr., 81375 München (DE)
(74) Vertreter: Klunker . Schmitt-Nilson . Hirsch

(56) Entgegenhaltungen:
- EP-A- 0 007 021
- EP-A- 0 847 128
- DE-A- 4 127 257
- DE-A- 19 633 944
- DE-A- 19 831 265
- DE-C- 376 877
- FR-A- 1 340 902

## Beschreibung

Die vorliegende Erfindung betrifft einen Schienenfahrzeug-Antrieb und insbesondere einen elektrischen Hohlwellen-Antriebsmotor, aufweisend einen Spulen tragenden Stator, einen ein Erregersystem aufweisenden Rotor, die zusammen im wesentlichen die Kontur des Antriebsmotors definieren, die koaxial angeordnet sind und durch die koaxial eine zylinderförmige Durchgangsöffnung ausgebildet ist, einen Abtrieb und eine elastische Kupplung zwischen Rotor und Abtrieb, die derart ausgebildet ist, daß sie Verlagerungen zwischen Abtrieb und Antriebsmotor zuläßt.

Ein derartiger Antriebsmotor ist beispielsweise aus dem Artikel "Geeignet für die Oberklasse - Permanentmagneterregte Großmaschinen erweitern ihr Einsatzgebiet", Advance, 1-2003, Seiten 28 - 30 bekannt. Bei diesem Hohlwellen-Antriebsmotor besteht die Kupplung aus mehreren Kupplungseinheiten, die jeweils axial neben dem Stator und dem Rotor angeordnet sind. Der Antrieb wird dadurch sehr voluminös und nimmt in der gezeigten Darstellung im wesentlichen den kompletten Raum zwischen zwei Scheibenrädern eines Radsatzes ein. Außerdem ist durch die relativ große axiale Länge der Kupplung das Gewicht der mit dem Radsatz gekoppelten ungefederten Massen verglichen mit sonst erforderlichen kleineren Anbauteilen deutlich erhöht, was aus verschiedensten Gründen, beispielsweise Schienenverschleiß, etc. unerwünscht ist.

FR-A-1 340 902 zeigt einen elektrischen Hohlwellen-Antriebsmotor, aufweisend einen Spulen tragenden Stator, einen ein Erregersystem aufweisenden Rotor, die zusammen mit dem Kollektor und einem außerhalb davon angeordneten Lager im Wesentlichen die Kontur des Antriebsmotors definieren, wobei der Rotor koaxial in dem Stator angeordnet ist und wobei in dem Rotor eine zylinderförmige Öffnung ausgebildet ist, ferner aufweisend einen Abtrieb und eine elastische Kupplung zwischen Rotor und Abtrieb, die derart ausgebildet ist, dass sie Verlagerungen zwischen Abtrieb und Antriebsmotor zulässt, und wobei die Kupplung innerhalb des von Rotor und Stator definierten Bereichs in der zylinderförmigen Öffnung angeordnet ist.

DE 376 877 und EP 0 007 021 zeigen Schienenfahrzeugantriebe mit Hohlwellen-Antriebsmotoren.

Es ist deshalb die Aufgabe der vorliegenden Erfindung, einen elektrischen Hohlwellen-Antriebsmotor der geschilderten Art bereitzustellen, der einen geringeren Bauraum einnimmt und bei dem die Massen der Kupplung und die sich betriebsmäßig durch die Massen und die Geometrie der Kupplung ergebenden Trägheitsmomente verringert sind.

Diese Aufgabe wird erfindungsgemäß mit den Merkmalen des Anspruchs 1 gelöst.

Bei einem Hohlwellen-Antriebsmotor definieren der Stator und der Rotor eine im wesentlichen ringförmige bzw. rohrförmige Kontur, die zur Seite hin durch die axiale Länge des Stators bzw. Rotors definiert ist, radial nach außen durch den Außendurchmesser von Rotor bzw. Stator definiert ist und radial nach innen durch die zylinderförmige Durchgangsöffnung definiert ist. Erfindungsgemäß soll die Kupplung des Hohlwellen-Antriebsmotors gemäß der vorliegenden Erfindung ganz oder teilweise innerhalb dieser Kontur angeordnet sein, und in diese ganz oder teilweise integriert sein. Insbesondere geringfügigere Teile der Kupplung wie beispielsweise Befestigungselemente wie Muttern oder Schrauben können über diese vorgegebene Kontur insbesondere in Axialrichtung nach außen ragen.

Ein derartiger elektrischer Hohlwellen-Antriebsmotor kann für verschiedenste Zwecke verwendet werden, beispielsweise zum Antrieb von Maschinenwellen, für Schiffsschraubenwellen, etc., besonders bevorzugt ist die Verwendung als Schienenfahrzeug-Antriebsmotor. Die elastische Kupplung zwischen Rotor und Abtrieb des Antriebsmotors ermöglicht einen gewissen Spielraum der angetriebenen Welle relativ zu dem Antriebsmotor, beispielsweise in Form einer winkelmäßigen Verlagerung relativ zur Längsachse des Antriebsmotors und/oder einer Parallelverlagerung relativ zur Längsachse des Antriebsmotors.

Vorzugsweise weist der Rotor eine Lageranordnung auf, die koaxial zu dem Erregersystem angeordnet ist und axial kürzer ist als der Rotor und/oder der Stator, und wobei die Kupplung in Axialrichtung im Wesentlichen in dem Ringraum angeordnet ist, der durch die axiale Differenz zwischen Rotor und/oder Stator und Lageranordnung gebildet ist. In der vorangehend definierten ringförmigen Kontur des Antriebsmotors ist der Stator in einem ersten Ringraum angeordnet, der eine vorgegebene axiale Länge hat. Der Rotor wiederum ist in einem zweiten Ringraum angeordnet, dessen axiale Länge etwas kürzer sein kann als die axiale Länge des Stator-Ringraums. Somit verbleibt ein freier Ringraum zwischen Stator-Ringraum und Rotor-Ringraum innerhalb der Kontur des Antriebsmotors, in dem die Kupplung auch untergebracht sein kann. Dieser freie Ringraum muß nicht unbedingt zusammenhängend sein, sondern kann in Axialrichtung auf zwei Ringräume, an axial entgegengesetzten Enden des Rotors, aufgeteilt sein. Es ist auch vorstellbar, daß der Rotor eine größere axiale Länge besitzt als der Stator. Bei einer derartigen Ausführungsform kann der freie Ringraum entsprechend statorseitig vorgesehen sein.

Vorzugsweise besitzen Rotor und Stator in Axialrichtung im Wesentlichen die gleiche Länge. Insbesondere sind im Wesentlichen die Einhüllenden von Rotor und Stator in Axialrichtung gleich lang. Es ist günstig, wenn die Wickelköpfe der Statorspulen nicht oder nur wenig über die axiale Länge des Stators ragen. Bei konventionellen Motoren nehmen die Wickelköpfe der Statorwicklung annähernd die Hälfte oder sogar mehr der axialen Länge des Stators ein. Das ergibt sich zum einen aus der Notwendigkeit, dass die Statorwicklung zu verschiedenen Umfangspositionen des Stators geführt werden muss. Dafür besteht ein erheblicher Platzbedarf in Axialrichtung. Diese verkettete Statorwicklung des gesamten Stators lässt sich auch nicht ohne diesen axialen Platzbedarf vernünftig realisieren. Ein weiterer Grund ist in dem Kühlerfordernis für die Statorwicklung zu sehen. Insbesondere bei Luftkühlung werden die Wickelköpfe der Statorwicklung bewußt in Axialrichtung verlängert, um eine ausreichend große Kühlfläche zu schaffen. Aus Platzgründen sollen derart große Wickelköpfe bei der vorliegenden Erfindung vermieden werden, so dass unter im Wesentlichen gleicher axialer Länge von Rotor und Stator verstanden wird, dass der Stator maximal die 1,5-fache Länge des Rotors, maximal die 1,4-fache Länge des Rotor, weniger als die 1,2-fache Länge des Rotors, weniger als die 1,1-fache Länge des Rotors, weniger als die 1,05-fache der Länge des Rotors beträgt.

Vorzugsweise ist der Stator von einer Mehrzahl von jeweils eine Spule aufweisenden Elektromagneten gebildet, wobei die einzelnen Spulen mit einer elektronischen Schalteinrichtung verbunden sind. Im Unterschied zu konventionellen Statorwicklungen ist nicht eine verkettete Statorwicklung vorgesehen, die über verschiedene umfangsmäßige Positionen des Stators geführt wird und somit die Wickelköpfe deutlich vergrößert. Vielmehr sind einzelne Spulen für einzelne Elektromagnetpole vorgesehen. Die einzelnen Spulen sind jeweils individuell mit einer Schalteinrichtung verbunden und werden von dieser Schalteinrichtung individuell strombeaufschlagt. Die einzelnen Spulen können dabei einzeln strombeaufschlagt werden oder sie können gruppenweise mit Strom beaufschlagt werden. Entsprechende rotatorische elektrische Maschinen sind in EP 0 094 978 A1 und EP 0 159 005 A1 beschrieben.

Vorzugsweise weist die Kupplung zwei elastische Kupplungseinheiten auf, die an axial entgegengesetzten Enden des Antriebsmotors angeordnet sind und mittels einer durch die zylinderförmige Durchgangsöffnung verlaufende Kraftübertragungswelle miteinander verbunden sind, wobei eine der Kupplungseinheiten den Rotor an die Kraftübertragungswelle anschließt und die andere Kupplungseinheit an ihrem Eingang an der Kraftübertragungswelle angeschlossen ist und deren Ausgang den Abtrieb des Antriebsmotors bildet bzw. an diese angeschlossen ist. Die Kraftübertragungswelle kann beispielsweise hohl in Form eines Kraftübertragungsrohrs ausgebildet sein. Die angetriebene Welle ist vorzugsweise in dem Inneren dieser Kraftübertragungswelle vorgesehen. Eine derartige Konstruktion der Kupplung ermöglicht eine winkelmäßige Schrägstellung und/oder eine Parallelverschiebung der angetriebenen Welle relativ zu der Rotationsachse des Antriebsmotors. Der Innendurchmesser des Kraftübertragungsrohres oder der weiter innen liegenden Kupplungseinheit kann den Maximaldurchmesser der angetriebenen Welle plus Spiel definieren.

Vorzugsweise weist die Kupplung eine Lenkerkupplung auf und besonders bevorzugt sind die Kupplungseinheiten der Kupplung Lenkerkupplungen. Lenkerkupplungen sind bekannt und werden beispielsweise unter der Marke Centalink® von der Firma Centa Antriebe Kirschey GmbH, Deutschland, hergestellt und vertrieben. Dabei ist über einen Umfang hinweg eine Mehrzahl von an beiden Enden elastisch gelagerten Lenkern vorhanden, die jeweils mit dem antreibenden Teil und mit dem angetriebenen Teil verbunden sind.

Vorzugsweise ist eine Trenneinrichtung vorgesehen, mittels derer die Verbindung zwischen Rotor und Abtrieb unterbrochen werden kann. Der Abtrieb des Hohlwellen-Antriebsmotors ist beispielsweise an der Rad-Welle oder dem Scheibenrad angeschlossen. Kommt es zu einem Defekt an dem Antriebsmotor, beispielsweise einem Lagerschaden, so wird bei einem weiteren Betrieb oder auch einem Abschleppen des Schienenfahrzeugs der Motor dennoch mit angetrieben. Das kann unerwünschte Verluste verursachen und kann zusätzlich zu einer weiteren Schädigung des Elektromotors führen.

Aus diesem Grund ist es wünschenswert, eine Trenneinrichtung vorzusehen, mittels derer der Abtrieb von dem Elektromotor entkoppelt werden kann. Das gilt insbesondere bei Antriebsmotoren mit einem dauermagnetischen Erregersystem, bei dem ein passiv angetriebener Antriebsmotor Verluste und induzierte Spannungen erzeugen kann. Vorzugsweise ist die Trenneinrichtung innerhalb der Kontur des Antriebsmotors angeordnet. Hier gilt generell das gleiche, was vorangehend zur Anordnung der Kupplung innerhalb der Kontur des Antriebsmotors angeführt wurde.

Je nach der speziellen Ausführungsform des Antriebsmotors und dem gewünschten Einsatzzweck kann die Trenneinrichtung so ausgebildet sein, daß sie beim Stillstand des Motors und/oder bei rotierendem Rotorteil ausgelöst werden kann. So kann die Trenneinrichtung beispielsweise derart aufgebaut sein, daß sie bei stillstehendem Abtrieb bzw. stillstehendem Rotor manuell betätigt bzw. ausgelöst werden kann. Eine derartige Ausführungsform kann relativ einfach und kostengünstig realisiert werden. Da die Trenneinrichtung in erster Linie bei einem Motorschaden ausgelöst werden soll, kann es ausreichend sein, beispielsweise bei einem Schienenfahrzeug, in einem solchen Fall dieses anzuhalten und von Hand die Trenneinrichtung auszulösen, um den entsprechenden Antriebsmotor von seinem Scheibenrad bzw. von seinem Radsatz zu entkoppeln. Das Schienenfahrzeug kann dann seine Fahrt mit den verbleibenden Antriebsmotoren fortsetzen bzw. abgeschleppt werden, ohne daß der ausgefallene Antriebsmotor beschädigt werden kann oder Verluste erzeugt.

Es kann auch günstig sein, die Trenneinrichtung mittels einer externen Betätigung auslösen zu können. Eine derartige externe Auslösung kann zusätzlich oder alternativ zu der manuellen Auslösung vorgesehen sein. Eine pneumatische oder eine hydraulische externe Betätigung ist günstig, da auf diese Weise relativ problemlos die erforderlichen Kräfte bereitgestellt werden können. Man kann sich auch Trenneinrichtungen vorstellen, die mittels eines Elektromagneten, etc. ausgelöst werden.

Vorzugsweise ist die Trenneinrichtung derart ausgebildet, daß sie bei rotierendem Antriebsmotor ausgelöst werden kann. Dadurch ist es bei der Schienenfahrzeuganwendung möglich, im Fahrbetrieb den Antriebsmotor abzukoppeln; ohne das Schienenfahrzeug zum Stillstand bringen zu müssen.

Vorzugsweise ist die Trenneinrichtung eine pneumatische Kopplungseinrichtung. Generell gilt, daß eine geeignete Kopplungseinrichtung - unabhängig davon, ob handbetätigt oder mechanisch betätigt - in der Art einer Reibkupplung, einer Stiftkupplung, einer Kupplung mit Verzahnungseingriff, etc. aufgebaut sein kann. Die miteinander in trennbaren Eingriff bringbaren Antriebs- und Abtriebsteile der Kupplung können beispielsweise ringförmig ausgebildet sein, wobei die Trennebene zwischen Antriebsteil und Abtriebsteil senkrecht zur Längsachse des Antriebsmotors angeordnet ist. Man kann sich auch eine ringförmige bzw. zylinderförmig verlaufende Trennfläche vorstellen, bei der Antriebsteil und Abtriebsteil in Radialrichtung miteinander in Eingriff gebracht werden. Bei einer pneumatischen Kopplungseinrichtung ist vorzugsweise das Antriebsteil oder das Abtriebsteil in der Art eines Kolbens in einer geeigneten Führung geführt. Wird ein Raum auf einer Seite dieses Kolbens druckbeaufschlagt, so wird dieses Teil durch die Druckbeaufschlagung entsprechend verlagert. Bei einem ringförmigen Antriebs- bzw. Abtriebsteil, welches in Längsrichtung des Antriebsmotors verlagerbar angeordnet ist, kann ein entsprechenden druckbeaufschlagbarer Ringraum vorgesehen sein.

Grundsätzlich ist auch eine automatische Trenneinrichtung vorstellbar, die bei aktiv angetriebenem Antriebsmotor die Kopplung zwischen Rotor und Abtrieb herstellt, jedoch bei passiv angetriebenem Antriebsmotor, d.h. für den Fall, daß der Antriebsmotor über den Abtrieb angetrieben wird, automatisch die Kopplung zu dem Rotor unterbindet und damit eine Rotation des Rotors unterbunden ist. Bei einer solchen Ausführungsart der Trenneinrichtung kann eine etwaig vorzusehende Bremseinrichtung geeignet positioniert sein, so dass sie bei unterbundener Kopplung nicht mit vom Abtrieb abgekoppelt wird.

Der Antriebsmotor ist nach dem Innenläuferprinzip mit außenliegendem Stator aufgebaut. Das hat mehrere Vorteile. So ist ein genereller Vorteil darin zu sehen, daß der Rotor bei einer derartigen Konstruktion bereits der anzutreibenden Welle benachbart angeordnet ist. Am Beispiel des Schienenfahrzeug-Antriebs ist das insbesondere dann der Fall, wenn der Abtrieb des Antriebsmotors auf die Rad-Welle übertragen werden soll oder auf einen wellennahen Bereich des Scheibenrads erfolgen soll. Darüber hinaus erlaubt der innenliegende Rotor einen besonders kompakten Aufbau des Antriebsmotors. Es wurde bereits erwähnt, daß typischerweise der Rotor axial kürzer aufgebaut sein kann als der Stator. Damit läßt sich eine Antriebsmotor-Konstruktion realisieren, bei der an entgegengesetzten Enden des Rotors und/oder im Bereich der zylinderförmigen Durchgangsöffnung durch den Rotor die Kupplung und/oder die Trenneinrichtung und/oder ein Untersetzungsgetriebe angeordnet ist.

Das Erregersystem ist radial außen am Rotor vorgesehen, eine Lageranordnung ist koaxial zu dem Erregersystem innerhalb davon vorgesehen und die Trenneinrichtung ist in einem ringförmigen Bereich radial zwischen Erregersystem und Lageranordnung angeordnet. In diesem Bereich kann beispielsweise auch alternativ oder zusätzlich ein Untersetzungsgetriebe angeordnet sein. Vorzugsweise ist die Lageranordnung axial kürzer ausgebildet als das Erregersystem des Rotors. Das ist möglich, da nicht die gesamte Rotorlänge für eine ausreichende Drehabstützung des Rotors benötigt wird. Diese axiale Differenzlänge kann genutzt werden, um in diesem Ringraum bzw. in den beiden axial entgegengesetzten Ringräumen die Kupplung bzw. die beiden Kupplungseinheiten unterzubringen. Die Kraftübertragungswelle bzw. das Kraftübertragungswelle bzw. das Kraftübertragungsrohr kann in der zylinderförmigen Durchgangsöffnung angeordnet sein.

Vorzugsweise weist der Antriebsmotor ein Untersetzungsgetriebe auf. Das kann bei schnell laufenden Antriebsmotoren bzw. bei sehr langsamen benötigten Wellendrehzahlen günstig sein. Die Verwendung des elektrischen Hohlwellen-Antriebsmotors als Direktantrieb ist jedoch bevorzugt. Das Untersetzungsgetriebe ist bevorzugt koaxial zum Antriebsmotor angeordnet. Vorzugsweise ist das Untersetzungsgetriebe zwischen Rotor und Kupplung vorgesehen. Bei einer derartigen Ausbildung ist das Untersetzungsgetriebe vorzugsweise zusammen mit dem Antriebsmotor abgestützt, d.h. bei einem Schienenfahrzeug-Antrieb ist die Abstützung des Untersetzungsgetriebes Fahrzeuggestell-seitig ausgebildet, so daß die zum Radsatz und zur Radsatz-Welle zuzurechnenden ungefederten Massen verringert sind. Alternativ kann das Untersetzungsgetriebe auch im Bereich des Abtriebs, d.h. nach der Kupplung vorgesehen sein. Das ermöglicht beispielsweise einen modularen Aufbau, bei dem beispielsweise das Scheibenrad bzw. die Rad-Welle mit dem Ausgang des Untersetzungsgetriebes verbunden ist. Damit gibt es beispielsweise bei einem Schienenfahrzeug-Antrieb Anwendungsfälle, bei denen eine Scheibenrad-seitige Anordnung des Untersetzungsgetriebes bevorzugt ist, ebenso wie es Anwendungsfälle gibt, bei denen eine Antriebsmotor-seitige Anordnung des Untersetzungsgetriebes günstiger ist. Es kann günstig sein, den Ausgang des Untersetzungsgetriebes direkt an die Kupplung anzuschließen. So kann der Ausgang des Untersetzungsgetriebes derart ausgebildet sein, daß er einen Teil der ersten Kupplungseinheit bildet.

Vorzugsweise sind die Statorspulen direkt flüssigkeitsgekühlt. Typischerweise sind viele Elektromotoren entweder gehäuseluftgekühlt oder wassermantelgekühlt. Dafür sind an dem Außendurchmesser des Antriebsmotors Kühlrippen im Falle der Gehäuseluftkühlung oder ein Wassermantel vorgesehen, was den Außendurchmesser des Antriebsmotors beträchtlich vergrößert. Um die radiale Ausdehnung der elektrischen Maschine verkleinern zu können bzw. den nutzbaren Innendurchmesser bei gleichem Außendurchmesser größer ausführen zu können, und um damit die erfindungsgemäße Integration der diversen Bauteile in den Antriebsmotor zu verbessern, ist es erfindungsgemäß bevorzugt, eine direkte Flüssigkeitskühlung der Statorspulen vorzusehen. Auf diese Weise wird sehr effektiv und sehr platzsparend Wärme direkt von den Statorspulen abgeführt, ohne zusätzlichen radialen Bauraum für die Kühlung zu benötigen. Die direkte Flüssigkeitskühlung der Statorspulen erfolgt durch direkte Umspülung der Statorspulen mit einer geeigneten Kühlflüssigkeit. Alternativ dazu ist auch eine mehr indirekte Kühlung durch in der Statorwindung angeordnete Kühlleitungen möglich.

Vorzugsweise ist das Erregersystem ein dauermagnetisches Erregersystem insbesondere bei einem innenliegenden Rotor. Durch die dauermagnetische Erregung lassen sich die radialen Ausmaße des Maschinenrings weiter verkleinern bzw. der nutzbare Innendurchmesser läßt sich weiter vergrößern. Ferner sind derartige Motoren besonders langlebig und wenig wartungsaufwendig, da verschleißanfällige Schleifkontakte, Bürsten etc. entfallen.

Die Erfindung betrifft ferner einen Schienenfahrzeug-Antrieb, aufweisend ein an einer Rad-Welle angeschlossenes Scheibenrad und einen fahrzeugseitig gelagerten Hohlwellen-Antriebsmotor gemäß der vorliegenden Erfindung, wobei die Rad-Welle in der zylinderförmigen Durchgangsöffnung angeordnet ist und antriebsmäßig an den Abtrieb des Antriebsmotors angeschlossen ist. Mit dem Begriff "Rad-Welle" sei sowohl eine Radsatzwelle, d.h. eine durchgehende Welle zwischen den beiden Scheibenrädern eines Radsatzes, als auch ein an einem Scheibenrad befestigter Wellenstummel bezeichnet. Entsprechend kann der Schienenfahrzeug-Antrieb zum Antreiben eines einzelnen Scheibenrads als auch zum Antreiben eines Radsatzes erfindungsgemäß verwendet werden. Dabei ist der Hohlwellen-Antriebsmotor am Drehgestell des Fahrzeugs oder an der Fahrzeugkonstruktion selbst befestigt. Auf diese Weise ist er in die Wirkung der Primärfederung eingebunden. Die elastische Kupplung des Hohlwellen-Antriebsmotors entkoppelt den Antriebsmotor von den erheblichen Schock- und Vibrationsbelastungen, die beim Abrollen des Scheibenrads auf der Schiene erzeugt werden. Gleichzeitig können die ungefederten Massen bei der erfindungsgemäßen Lösung trotz der Einbindung der Rad-Welle in den Antriebsmotor sehr gering gehalten werden. Die Schienen bzw.

Geleise und das Scheibenrad selbst werden auf diese Art und Weise geschont und deren Lebensdauer verbessert. Der Abtrieb des Antriebsmotors kann an der Rad-Welle oder an dem Scheibenrad angeschlossen sein.

Vorzugsweise ist der Abtrieb derart ausgebildet, daß der Hohlwellen-Antriebsmotor an ein konventionelles Scheibenrad angeschlossen werden kann. Das kann besonders dann leicht realisiert sein, wenn der Abtrieb vom Außenumfang des Scheibenrads nach innen versetzt und insbesondere in der Nähe der Rad-Welle an dem Scheibenrad angeschlossen ist. Der Schienenfahrzeug-Antrieb bzw. der elektrische Hohlwellen-Antriebsmotor wird in der Praxis vorzugsweise in Kombination mit mehreren anderen gleichen Motoren innerhalb eines Wagens oder eines Zugs verwendet. Dabei sind die Antriebsmotoren elektronisch kommutiert, d.h. zwischen dem gemeinsamen Gleichspannungszwischenkreis und jedem einzelnen Motor ist eine Antriebs-Leistungselektronik zur elektronischen Kommutierung vorgesehen. Der Gleichspannungszwischenkreis bildet die gemeinsame Versorgungsbasis der Antriebsmotoren. Der Gleichspannungszwischenkreis kann aus verschiedenen Quellen gespeist werden, beispielsweise der Oberleitungseinspeisung oder der Dieselmotor-Generatorversorgung. Besonders bevorzugt sind Hybridkombinationen unter Verwendung von Energiespeichern. Mit derartigen Hybridsystemen kann Bremsenergie, die von den Antriebsmotoren im Bremsbetrieb erzeugt wird, direkt in die Energiespeicher zurückgespeist werden und von dort bedarfsweise wieder abgerufen werden. Ein ähnliches Speisungsschema aus einem gemeinsamen Gleichspannungszwischenkreis läßt sich auch bei anderen Anwendungen realisieren, bei denen mehrere Antriebsmotoren zusammen eingesetzt werden. Man kann sich auch überlegen, eine einzige Antriebs-Leistungselektronik für mehrere Antriebsmotoren vorzusehen. Eine Hybridkombination bietet sich auch bei Anwendungen an, bei denen lediglich ein Antriebsmotor vorgesehen ist.

Der Schienenfahrzeug-Antrieb eignet sich beispielsweise für Eisenbahnen, Straßenbahnen, Bergwerksförderbahnen, etc. Er ist jedoch besonders bevorzugt für Straßenbahnen, bei denen mit der zunehmenden Einführung von Niederflurwägen die Raumeinsparungsanforderungen an die Antriebssysteme zunehmend an Bedeutung gewinnen.

Vorzugsweise ist die Kupplung derart ausgebildet, daß sie einen Achsversatz zwischen Rad-Welle oder sonstiger angetriebener Welle und Antriebsmotor von mindestens 10 mm zuläßt. Je nach Anforderung kann auch ein zulässiger Achsversatz von weniger als 10 mm, beispielsweise von mindestens 5 mm aber auch von mehr, beispielsweise mindestens 20 mm erforderlich sein. Während bei Schienenfahrzeug-Antrieben typischerweise die Primärfederung des Schienenfahrzeugs die Rückstellung einer Achsversatz-Auslenkung bewirkt, so daß ein Rückstelleffekt bei der Kupplung praktisch nicht zwingend erforderlich ist, kann bei anderen Anwendungen, beispielsweise bei Werkzeugmaschinen, etc. eine gewisse Rückstellkraft der Kupplung wünschenswert oder gar erforderlich sein.

Vorzugsweise weist der Schienenfahrzeug-Antrieb eine Bremseinrichtung auf. Dabei kann es sich um eine von dem Antrieb separate Bremseinrichtung handeln. Es kann sich beispielsweise um eine mechanische Bremseinrichtung handeln, bei der ein oder mehrere Bremsklötze auf eine Bremstrommel oder Bremsscheibe einwirken. Alternativ könnte auch eine elektrische Bremseinrichtung, etc. beispielsweise in der Form einer Wirbelstrombremse, vorgesehen sein. Daneben kann der Antriebsmotor selbst auch als eine Bremse betrieben werden. Die kompakte Bauweise des Schienenfahrzeug-Antriebs gemäß der vorliegenden Erfindung ermöglicht die Anordnung einer derartigen zusätzlichen Bremseinrichtung auch an den angetriebenen Radsätzen und Scheibenrädern, die bislang typischerweise ungebremst sind. Auf diese Weise lassen sich beispielsweise zusätzliche Bremseinrichtungen realisieren bzw. die Brems-einrichtungen und die Antriebe an den gleichen Radsätzen bzw. Scheibenrädern anordnen, was aus wartungstechnischer Sicht vorteilhaft sein kann. Es ist besonders bevorzugt, die Bremseinrichtung außenliegend, d. h. vor Scheibenrad, Abtrieb und Antriebsmotor anzuordnen, so daß der Antriebsmotor zwischen Scheibenrad und Bremseinrichtung liegt.

Vorzugsweise ist das Untersetzungsgetriebe zwischen Antriebsmotor und Scheibenrad vorgesehen.

Die Erfindung betrifft ferner ein Schienenfahrzeug aufweisend einen Schienenfahrzeug-Antrieb gemäß der vorliegenden Erfindung.

Die Erfindung und Ausgestaltungen der Erfindung werden nachfolgend anhand eines zeichnerisch dargestellten Ausführungsbeispiels näher erläutert. Es zeigt:

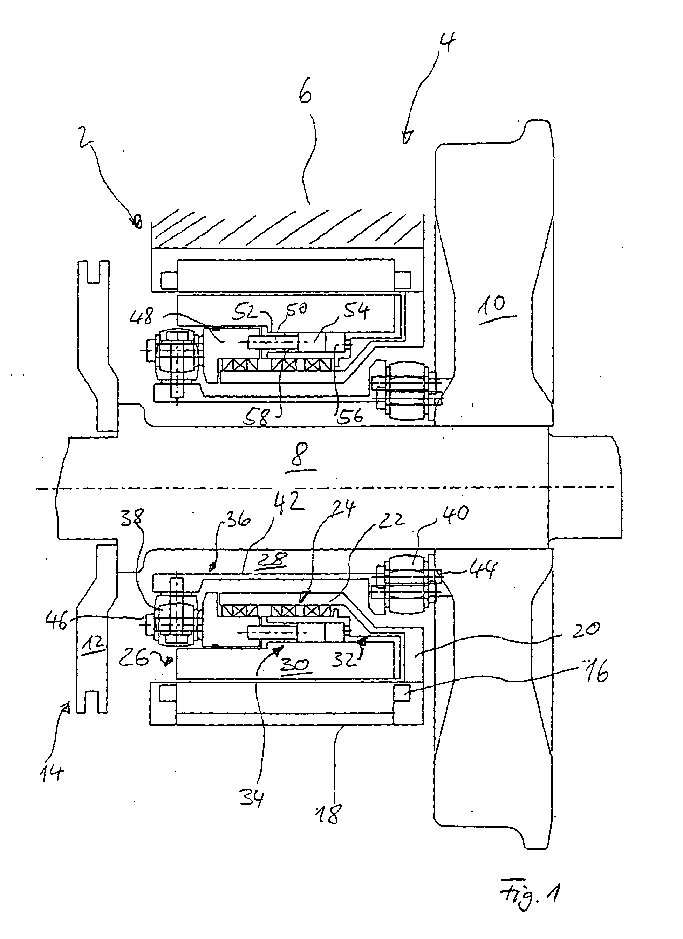

- Fig. 1: einen erfindungsgemäßen Hohlwellen-Antriebsmotor als Bestandteil eines Schienenfahrzeug-Antriebs.

In der Figur erkennt man einen elektrischen Hohlwellen-Antriebsmotor 2 als Bestandteil eines Schienenfahrzeug-Antriebs 4. Der elektrische Hohlwellen-Antriebsmotor 2 ist, wie durch die Schraffur 6 dargestellt fahrzeugseitig, d.h. am Drehgestell oder an der Fahrzeugzelle selbst angeschlossen. Man erkennt ferner eine Rad-Welle 8, die koaxial zu dem Antriebsmotor 2 angeordnet ist und ein Scheibenrad 10 trägt. Die Rad-Welle 8 und damit das Scheibenrad 10 ist über eine Primärfederung an dem Drehgestell bzw. der Fahrzeugzelle elastisch nachgiebig abgestützt. Man erkennt ferner eine Bremsscheibe 12 einer Bremseinrichtung 14.

Der Hohlwellen-Antriebsmotor 2 weist einen Spulen 16 tragenden Stator 18 auf, der wie bei 6 gezeigt, fahrzeugseitig festgelegt ist. An dem Stator 18 ist eine Lagerabstützung 20 angeschlossen. Die Lagerabstützung 20 besitzt eine trichterförmige Gestalt und trägt an ihrem rohrförmigen Abschnitt 22 eine Lageranordnung 24 zum drehbaren Abstützen eines Rotors 26.

Die Lagerabstützung 20 bzw. deren innerer rohrförmiger Abschnitt 22 definiert an seinem inneren Umfang die koaxiale zylinderförmige Durchgangsöffnung 28 des eigentlichen Elektromotors.

Der Rotor 26 weist ein permanentmagnetisch ausgebildetes Erregersystem 30 auf und ist mit einer Rotorabstützung 32 an der Lageranordnung 24 drehbar abgestützt. Das mit 30 in der Fig. 1 bezeichnete Erregersystem umfasst neben dem eigentlichen Permanentmagneten eine Abstützstruktur, in der die Permanentmagnete abgestützt sind. Die Abstützstruktur kann Flussleitelemente und/oder Flusskonzentrationselemente aufweisen.

Zwischen Erregersystem 30 und Lageranordnung 24 ist eine Trenneinrichtung 34 vorgesehen. Eine Kupplung 36 ist als Kombination von Lenkerkupplungen, aufweisend einen ersten Lenkerkranz 38, einen zweiten Lenkerkranz 40 und eine diese verbindende Kraftübertragungswelle bzw. ein Kraftübertragungsrohr 42 ausgebildet. Das Kraftübertragungsrohr 42 ist in der zylinderförmigen Durchgangsöffnung 28 angeordnet. Der Ausgang des zweiten Lenkerkranzes 40 definiert gleichzeitig den Abtrieb 44 des Hohlwellen-Antriebsmotors 2.

Der erste Lenkerkranz 38 ist in einem Ringraum angeordnet, der im wesentlichen nach außen durch das Erregersystem 30 des Rotors 26 begrenzt ist und nach innen durch die zylinderförmige Durchgangsöffnung 28 des eigentlichen Elektromotors, d.h. durch den Innenumfang des rohrförmigen Abschnitts 22 der Lagerabstützung 20, definiert ist, und axial im wesentlichen durch die axiale Länge des Stators begrenzt ist. Lediglich Köpfe von Befestigungselementen 46 ragen in axialer Richtung aus diesem Raum heraus. Je nach Auslegung könnte auch ein gewisser Anteil des Lenkerkranzes 38 axial aus diesem Raum heraus stehen. In die axial entgegengesetzte Richtung ist dieser Ringraum für den ersten Lenkerkranz 38 begrenzt durch die Lageranordnung 24 bzw. die Trenneinrichtung 34. In ähnlicher Weise ist der zweite Lenkerkranz 40 in einem Ringraum angeordnet, der in Radialrichtung nach außen durch die Lagerabstützung 20 begrenzt ist und nach innen durch die tatsächliche Hohlwellen-Antriebsmotor-Durchgangsöffnung definiert ist. In Axialrichtung nach außen begrenzt wieder im wesentlichen die axiale Länge des Stators diesen Ringraum. Man erkennt, dass wieder geringfügige Teile des zweiten Lenkerkranzes seitlich über diesen Ringraum ragen. Das ist erforderlich, um im Anschluss an das Scheibenrad 10 den erforderlichen Spielraum zwischen Antriebsmotor 2 und Scheibenrad 10 aufrechtzuerhalten. Für den Fall des Abtriebs 44 an die Rad-Welle 8 kann der zweite Lenkerkranz 44 im wesentlichen komplett innerhalb der durch den Stator 18 definierten Kontur untergebracht sein. Bleibt noch zu ergänzen, dass dieser Ringraum axial nach innen von dem sich verjüngenden Abschnitt der Lagerabstützung 20 begrenzt ist.

Die Trenneinrichtung 34 weist einen Mitnehmerring 48 auf, der den Ausgang der Trenneinrichtung bildet und an den ersten Lenkerkranz 38 angeschlossen ist. Der Mitnehmerring 48 ist an der Lagerabstützung 20 drehbar gelagert. Der Mitnehmerring 48 weist ferner Mitnehmeröffnungen auf, in die Mitnehmerstifte 50 betriebsmäßig eingreifen. Die Mitnehmerstifte 50 sind in einem Führungsöffnungen aufweisenden Führungsring 52 geführt, der fest an die Rotorabstützung 32 bzw. die Abstützstruktur des Erregersystems 30 angeschlossen ist. Betriebsmäßig rotieren somit die Mitnehmerstifte gemeinsam mit dem Rotor 26. Die Mitnehmerstifte 50 sind an einem Ringkolben 54 befestigt. Der Ringkolben 54 ist in einem Ringraum geführt, dessen Innenumfang von der Rotorabstützung 32 und dessen Außenumfang von der Abstützstruktur des Erregersystems 30 definiert ist. Der Ringkolben unterteilt diesen Ringraum in zwei Ringkammern 56, 58. Diese Ringräume 56, 58 können von außen druckbeaufschlagt werden. Ist der Druck in dem Ringraum 56 größer als der Druck in dem Ringraum 58, so wird der Ringkolben 54 und damit die Mitnehmerstifte 50 nach links in der Fig. 1 verschoben, so dass die Mitnehmerstifte in die entsprechenden Öffnungen des Mitnehmerrings 48 eingreifen und somit die Verbindung zwischen Rotor 26 und dem ersten Lenkerkranz 38 herstellen. Wird jedoch der Druck in der Ringkammer 58 erhöht, bewegt sich schließlich der Ringkolben 54 nach rechts in der Fig. 1, bringt die Mitnehmerstifte 50 außer Eingriff mit dem Mitnehmerring 48 und trennt den eigentlichen Elektromotor von dem Scheibenrad 10.

Ein besonderer Vorteil der kompakten Ausbildung des elektrischen Hohlwellen-Antriebsmotors 2 insbesondere in Verbindung mit der Lenkerkupplung 36 ist, dass der radseitige Anschluss des Abtriebs 44 auf einen kleinen Durchmesser an dem Scheibenrad 10 erfolgt und damit ein übliches Scheibenrad 10 in einer gängigen Standardausführung verwendet werden kann, wie es beispielsweise im Straßenbahn- und Eisenbahnbereich zum Einsatz kommt. Lediglich im radial inneren Teil einer Seite der Radscheibe 10 müssen Aufnahmepunkte für die Kupplung, z.B. für die Lenker ergänzt werden. Beispielsweise in der Form von Schraubenöffnungen, etc.

Man erkennt in der Fig. 1 insbesondere, dass der Rotor 26 eine kürzere axiale Länge als der Stator 18 aufweist. Das wird erfindungsgemäß dadurch genutzt, dass die Lagerabstützung 20 in dem so freiwerdenden Raum untergebracht ist.

Als weiteres erkennt man, dass die Lageranordnung 24 für den Rotor 26 eine deutlich kürzere axiale Länge als der Rotor 26 selbst haben kann. In dem so gebildeten Ringraum ist der erste Lenkerkranz 38 und zum Teil auch der zweite Lenkerkranz 40 angeordnet. Durch die Anordnung des Spalts zwischen Rotor 26 und Stator 18 möglichst weit außen bei einem vorgegebenen Außenumfang des Antriebsmotors 2 und insbesondere durch das verwendete Innenläuferprinzip mit außenliegendem Stator 18 und der vorteilhaften dauermagnetischen Erregung des innenliegenden Rotors 26 wird relativ viel Raum innerhalb von dem Erregersystem 30 geschaffen, in dem die Trenneinrichtung 34 und/oder die Kupplung 36 angeordnet sein kann. Außerdem können bei einer derartigen Konstruktion hohe Antriebsdrehmomente des Antriebsmotors 2 realisiert werden. Die vorliegende Konstruktion erlaubt bei minimalen Außenkonturen eine federungsmäßige Entkopplung zwischen Antriebsmotor 2 und Scheibenrad 10 bzw. Rad-Welle 8.

## Patentansprüche

1. Elektrischer Hohlwellen-Antriebsmotor (2), aufweisend einen ein Erregersystem (30) aufweisenden Rotor (26), einen außerhalb des Rotors (26) angeordneten, Spulen (16) tragenden Stator (18), die zusammen im Wesentlichen die Kontur des Antriebsmotors (2) definieren, die koaxial angeordnet sind und durch die koaxial eine zylinderförmige Durchgangsöffnung (28) ausgebildet ist, einen Abtrieb (44) und eine elastische Kupplung (36) zwischen Rotor (26) und Abtrieb (44), die derart ausgebildet ist, dass sie Verlagerungen zwischen Abtrieb (44) und Antriebsmotor (2) zulässt, wobei die Kupplung (36) innerhalb der Kontur des Antriebsmotors (2) angeordnet ist, und wobei das Erregersystem (30) radial außen am Rotor (26) vorgesehen ist, eine Lageranordnung (24) koaxial zu dem Erregersystem (30) innerhalb davon vorgesehen ist und eine Trenneinrichtung (34), mittels derer die Verbindung zwischen Rotor (26) und Abtrieb (44) unterbrochen werden kann, in einem ringförmigen Bereich radial zwischen Erregersystem (30) und Lageranordnung (24) angeordnet ist.

2. Hohlwellen-Antriebsmotor (2) nach Anspruch 1, **dadurch gekennzeichnet, dass** der Rotor (26) eine Lageranordnung (24) aufweist, die koaxial zu dem Erregersystem angeordnet ist und axial kürzer ist als der Rotor (26) und wobei die Kupplung (36) in Axialrichtung im Wesentlichen in dem Ringraum angeordnet ist, der durch die axiale Differenz zwischen Rotor (26) und Lageranordnung (24) gebildet ist.

3. Hohlwellen-Antriebsmotor (2) nach Anspruch 1 oder 2, **dadurch gekennzeichnet, dass** der Rotor (26) eine Lageranordnung (24) aufweist, die koaxial zu dem Erregersystem (30) angeordnet ist und axial kürzer ist als der Stator (18) und wobei die Kupplung (36) in Axialrichtung im Wesentlichen in dem Ringraum angeordnet ist, der durch die axiale Differenz zwischen Stator (18) und Lageranordnung (24) gebildet ist.

4. Hohlwellen-Antriebsmotor (2) nach einem der Ansprüche 1 bis 3, **dadurch gekennzeichnet, dass** Rotor (26) und Stator (18) in Axialrichtung im Wesentlichen gleiche Länge besitzen.

5. Hohlwellen-Antriebsmotor (2) nach einem der Ansprüche 1 bis 4, **dadurch gekennzeichnet, dass** der Stator (18) von einer Mehrzahl von jeweils eine Spule (16) aufweisenden Elektromagneten gebildet ist, wobei die einzelnen Spulen mit einer Schalteinrichtung verbunden sind.

6. Hohlwellen-Antriebsmotor (2) nach einem der Anspruch 1 bis 5, **dadurch gekennzeichnet, dass** die Kupplung (36) zwei elastische Kupplungseinheiten (38, 40) aufweist, die an axial entgegengesetzten Enden des Antriebsmotors (2) angeordnet sind und mittels einer durch die zylinderförmige Durchgangsöffnung (28) verlaufende Kraftübertragungswelle (42) miteinander verbunden sind, wobei eine der Kupplungseinheiten (38) den Rotor (26) an die Kraftübertragungswelle (42) anschließt und die andere Kupplungseinheit (40) an ihrem Eingang an der Kraftübertragungswelle (42) angeschlossen ist und deren Ausgang den Abtrieb (44) des Antriebsmotors (2) bildet bzw. an diesem angeschlossen ist.

7. Hohlwellen-Antriebsmotor (2) nach einem der Ansprüche 1 bis 6, **dadurch gekennzeichnet, dass** die Kupplung (36) eine Lenkerkupplung aufweist.

8. Hohlwellen-Antriebsmotor (2) nach Anspruch 7, **dadurch gekennzeichnet, dass** die Trenneinrichtung (34) innerhalb der Kontur des Antriebsmotors (2) angeordnet ist.

9. Hohlwellen-Antriebsmotor (2) nach Anspruch 7 oder 8, **dadurch gekennzeichnet, dass** die Trenneinrichtung (34) derart ausgebildet ist, dass sie bei rotierendem Antriebsmotor (2) ausgelöst werden kann.

10. Hohlwellen-Antriebsmotor (2) nach einem der Ansprüche 7 bis 9, **dadurch gekennzeichnet, dass** die Trenneinrichtung (34) eine pneumatische Kopplungseinrichtung ist.

11. Hohlwellen-Antriebsmotor (2) nach einem der Ansprüche 1 bis 10, ferner aufweisend ein Untersetzungsgetriebe.

12. Hohlwellen-Antriebsmotor (2) nach Anspruch 11, **dadurch gekennzeichnet, dass** das Untersetzungsgetriebe zwischen Rotor (26) und Kupplung (36) vorgesehen ist.

13. Hohlwellen-Antriebsmotor (2) nach einem der Ansprüche 1 bis 12, **dadurch gekennzeichnet, dass** die Statorspulen (16) direkt flüssigkeitsgekühlt sind.

14. Hohlwellen-Antriebsmotor (2) nach einem der Ansprüche 1 bis 13, **dadurch gekennzeichnet, dass** das Erregersystem (30) ein dauermagnetisches Erregersystem ist.

15. Schienenfahrzeug-Antrieb (4), aufweisend ein an einer Rad-Welle (8) angeschlossenes Scheibenrad (10) und einen fahrzeugseitig gelagerten Hohlwellen-Antriebsmotor (2) gemäß einem der Ansprüche 1 bis 14, wobei die Rad-Welle (8) in der zylinderförmigen Durchgangsöffnung (26) angeordnet ist und antriebsmäßig an den Abtrieb (44) angeschlossen ist.

16. Schienenfahrzeug-Antrieb (4) nach Anspruch 15, **dadurch gekennzeichnet, dass** der Abtrieb (44) zum Anschluss an ein konventionelles Scheibenrad (10) ausgebildet ist.

17. Schienenfahrzeug-Antrieb (4) nach Anspruch 15 oder 16, **dadurch gekennzeichnet, dass** die Kupplung (36) einen Achsversatz zwischen Rad-Welle (8) und Antriebsmotor (2) von mindestens 5 mm zulässt.

18. Schienenfahrzeug-Antrieb (4) nach einem der Ansprüche 15 bis 17, **dadurch gekennzeichnet, dass** eine Bremseinrichtung (14) vorgesehen ist.

19. Schienenfahrzeug-Antrieb (4) nach Anspruch 18, **dadurch gekennzeichnet, dass** die Bremseinrichtung (14) mit der Rad-Welle (8) verbunden ist und der Antriebsmotor (2) zwischen Scheibenrad (10) und Bremseinrichtung (14) vorgesehen ist.

20. Schienenfahrzeug-Antrieb (4) nach einem der Ansprüche 15 bis 19, **dadurch gekennzeichnet, dass** das Untersetzungsgetriebe zwischen Antriebsmotor (2) und Scheibenrad (10) vorgesehen ist.

21. Schienenfahrzeug aufweisend einen Schienenfahrzeug-Antrieb (4) gemäß einem der Ansprüche 15 bis 20.

## Claims

1. An electric driving motor (2) with hollow shaft, comprising a rotor (26) having an excitation system (30), a stator (18) arranged externally of said rotor (26) and carrying coils (26), said rotor and said stator together substantially defining the contour of said driving motor (2) and being arranged coaxially and having a cylindrical through-opening (28) formed coaxially therethrough, and comprising a driven means (44) and an elastic coupling (36) between said rotor (26) and said driven means (44) that is designed to permit displacements between said driven means (44) and said driving motor (2), with the coupling (36) being arranged within the contour of the driving motor (2) and with the excitation system (30) being provided radially outside on the rotor (26), with a bearing arrangement (24) being provided coaxially with the excitation system (30) and internally of the same, and with a separating means (34) for interrupting the connection between rotor (26) and driven means (44) being disposed in an annular portion radially between excitation system (30) and bearing arrangement (24).

2. The electric driving motor (2) with hollow shaft according to claim 1,
**characterized in that** the rotor (26) has a bearing arrangement (24) that is arranged coaxially with the excitation system and is axially shorter than the rotor (26), and wherein the coupling (36) is arranged in axial direction substantially in the annular space defined by the axial difference between rotor (26) and bearing arrangement (24).

3. The electric driving motor (2) with hollow shaft according to claims 1 or 2,
**characterized in that** the rotor (26) has a bearing arrangement (24) that is arranged coaxially with the excitation system (30) and is axially shorter than the stator (18), and wherein the coupling (36) is arranged in axial direction substantially in the annular space defined by the axial difference between rotor (26) and bearing arrangement (24).

4. The electric driving motor (2) with hollow shaft according to any of claims 1 to 3,
**characterized in that** the rotor (26) and the stator (18) have substantially the same length in axial direction.

5. The electric driving motor (2) with hollow shaft according to any of claims 1 to 4,
**characterized in that** the stator (18) is constituted by a plurality of electromagnets each having a coil (16), the individual coils being connected to a switching means.

6. The electric driving motor (2) with hollow shaft according to any of claims 1 to 4,
**characterized in that** the coupling (36) comprises two elastic coupling units (38, 40) arranged on axially opposite ends of the driving motor (2) and being connected to each other by means of a force transmission shaft (42) extending through the cylindrical through-opening (28), one of said coupling units (38) connecting the rotor (26) to the force transmission shaft (42) and the other coupling unit (40) having its input connected to the force transmission shaft (42) and the output thereof constituting or being connected to the driven means (44) of the driving motor (2).

7. The electric driving motor (2) with hollow shaft according to any of claims 1 to 6,
**characterized in that** the coupling (36) comprises a steering coupling.

8. The electric driving motor (2) with hollow shaft according to claim 7,
**characterized in that** the separating means (34) is arranged within the contour of the driving motor (2).

9. The electric driving motor (2) with hollow shaft according to claim 7 or 8,
**characterized in that** the separating means (34) is designed such it can be triggered while the driving motor (2) is in rotation.

10. The electric driving motor (2) with hollow shaft according to any of claims 7 to 9,
**characterized in that** the separating means (34) is a pneumatic coupling means.

11. The electric driving motor (2) with hollow shaft according to any of claims 1 to 10,
further comprising a step-down transmission unit.

12. The electric driving motor (2) with hollow shaft according to claim 11,
**characterized in that** said step-down transmission unit is arranged between rotor (26) and coupling (36).

13. The electric driving motor (2) with hollow shaft according any of claims 1 to 12,
**characterized in that** the stator coils (16) are directly liquid-cooled.

14. The electric driving motor (2) with hollow shaft according to any of claims 1 to 13,
**characterized in that** the excitation system (30) is a permanent-magnetic excitation system.

15. A railbound vehicle drive (4), comprising a disk wheel (10) joined to a wheel shaft (8) and a driving motor (2) with hollow shaft according to any of claims 1 to 14, said driving motor (2) being supported on the vehicle side, wherein said wheel shaft (8) is arranged in the cylindrical through-opening (26) and is operationally connected to the driven means (44).

16. The railbound vehicle drive (4) according to claim 15,
**characterized in that** said driven means (44) is designed to be connected to a conventional disk wheel (10).

17. The railbound vehicle drive (4) according to claim 15 or 16,
**characterized in that** the coupling (36) permits an axial displacement between wheel shaft (8) and driving motor (2) of at least 5 mm.

18. The railbound vehicle drive (4) according to any of claims 15 to 17,
**characterized in that** there is provided a brake means (14).

19. The railbound vehicle drive (4) according to claim 18,
**characterized in that** said brake means (14) is connected to the wheel shaft (8) and the driving motor (2) is provided between disk wheel (10) and brake means (14).

20. The railbound vehicle drive (4) according to any of claims 15 to 19,
**characterized in that** the step-down transmission unit is provided between driving motor (2) and disk wheel (10).

21. A railbound vehicle comprising a railbound vehicle drive (4) according to any of claims 15 to 20.

## Revendications

1. Moteur d'entraînement électrique à arbre creux (2), comportant un rotor (26), muni d'un système d'excitation (30), un stator (18), monté en dehors du rotor (26) et portant des bobines (16), lesquels conjointement définissent sensiblement le contour du moteur d'entraînement (2), lesquels sont agencés coaxialement et par lesquels est formée coaxialement une ouverture de passage (28) cylindrique, un entraînement de sortie (44) et un accouplement élastique (36), monté entre le rotor (26) et l'entraînement de sortie (44) et réalisé de telle sorte qu'il autorise des déplacements entre l'entraînement de sortie (44) et le moteur d'entraînement (2), et dans lequel moteur d'entraînement le système d'excitation (30) est prévu radialement à l'extérieur sur le rotor (26), un système de palier (24) est prévu à l'intérieur de celui-ci et coaxialement au système d'excitation (30) et un dispositif de séparation (34), qui permet d'interrompre la liaison entre le rotor (26) et l'entraînement de sortie (44), est monté dans une zone annulaire radialement entre le système d'excitation (30) et le système de palier (24).

2. Moteur d'entraînement à arbre creux (2) selon la revendication 1, **caractérisé en ce que** le rotor (26) comporte un système de palier (24), qui est monté coaxialement au système d'excitation et qui, dans le sens axial, est plus court que le rotor (26), et l'accouplement (36) étant monté dans le sens axial sensiblement dans la zone annulaire, qui est formée par la différence axiale entre le rotor (26) et le système de palier (24).

3. Moteur d'entraînement à arbre creux (2) selon la revendication 1 ou 2, **caractérisé en ce que** le rotor (26) comporte un système de palier (24), qui est monté coaxialement au système d'excitation (30) et qui, dans le sens axial, est plus court que le stator (18), et l'accouplement (36) étant monté dans le sens axial sensiblement dans la zone annulaire, qui est formée par la différence axiale entre le stator (18) et le système de palier (24).

4. Moteur d'entraînement à arbre creux (2) selon l'une quelconque des revendications 1 à 3, **caractérisé en ce que** le rotor (26) et le stator (18) ont sensiblement la même longueur dans le sens axial.

5. Moteur d'entraînement à arbre creux (2) selon l'une quelconque des revendications 1 à 4, **caractérisé en ce que** le stator (18) est formé par une pluralité d'électroaimants, comportant chacun une bobine (16), les différentes bobines étant reliées à un dispositif de commutation.

6. Moteur d'entraînement à arbre creux (2) selon l'une quelconque des revendications 1 à 5, **caractérisé en ce que** l'accouplement (36) comporte deux unités d'accouplement (38, 40) qui sont montées sur les extrémités opposées dans le sens axial du moteur d'entraînement (2) et qui sont reliées l'une à l'autre au moyen d'un arbre de transmission de force (42) s'étendant à travers l'ouverture de passage (28) cylindrique, l'une des unités d'accouplement (38) reliant le rotor (26) à l'arbre de transmission de force (42) et l'autre unité d'accouplement (40) étant reliée au niveau de son entrée à l'arbre de transmission de force (42) et la sortie de celle-ci formant l'entraînement de sortie (44) du moteur d'entraînement (2) ou étant reliée à celui-ci.

7. Moteur d'entraînement à arbre creux (2) selon l'une quelconque des revendications 1 à 6, **caractérisé en ce que** l'accouplement (36) est un accouplement de bielle.

8. Moteur d'entraînement à arbre creux (2) selon la revendication 7, **caractérisé en ce que** le dispositif de séparation (34) est monté à l'intérieur du contour du moteur d'entraînement (2).

9. Moteur d'entraînement à arbre creux (2) selon la revendication 7 ou 8, **caractérisé en ce que** le dispositif de séparation (34) est réalisé de telle sorte qu'il peut être déclenché lorsque le moteur d'entraînement (2) tourne.

10. Moteur d'entraînement à arbre creux (2) selon l'une quelconque des revendications 7 à 9, **caractérisé en ce que** le dispositif de séparation (34) est un dispositif de couplage pneumatique.

11. Moteur d'entraînement à arbre creux (2) selon l'une quelconque des revendications 1 à 10, comportant en outre un réducteur.

12. Moteur d'entraînement à arbre creux (2) selon la revendication 11, **caractérisé en ce que** le réducteur est prévu entre le rotor (26) et l'accouplement (36).

13. Moteur d'entraînement à arbre creux (2) selon l'une quelconque des revendications 1 à 12, **caractérisé en ce que** les bobines (16) du stator sont directement refroidies par un liquide.

14. Moteur d'entraînement à arbre creux (2) selon l'une quelconque des revendications 1 à 13, **caractérisé en ce que** le système d'excitation (30) est un système d'excitation à aimant permanent.

15. Système d'entraînement (4) d'un véhicule ferroviaire, comportant une roue pleine (10) attachée à un arbre (8), et un moteur d'entraînement à arbre creux (2) selon une des revendications 1 à 14, monté du côté du véhicule, l'arbre de roue (8) étant agencé dans l'ouverture de passage (26) cylindrique et étant relié en entraînement avec l'entraînement de sortie (44).

16. Système d'entraînement (4) d'un véhicule ferroviaire selon la revendication 15, **caractérisé en ce que** l'entraînement de sortie (44) est réalisé pour l'assemblage à une roue pleine (10) classique.

17. Système d'entraînement (4) d'un véhicule ferroviaire selon la revendication 15 ou 16, **caractérisé en ce que** l'accouplement (36) autorise un décalage axial de 5 mm au moins entre l'arbre de roue (8) et le moteur d'entraînement (2).

18. Système d'entraînement (4) d'un véhicule ferroviaire selon l'une quelconque des revendications 15 à 17, **caractérisé en ce qu'**il est prévu un dispositif de freinage (14).

19. Système d'entraînement (4) d'un véhicule ferroviaire selon la revendication 18, **caractérisé en ce que** le dispositif de freinage (14) est relié à l'arbre de roue (8), et le moteur d'entraînement (2) est prévu entre la roue pleine (10) et le dispositif de freinage (14).

20. Système d'entraînement (4) d'un véhicule ferroviaire selon l'une quelconque des revendications 15 à 19, **caractérisé en ce que** le réducteur est prévu entre le moteur d'entraînement (2) et la roue pleine (10).

21. Véhicule ferroviaire comportant un système d'entraînement (4) selon une des revendications 15 à 20.
